# EUROPEAN PATENT SPECIFICATION

(11) **EP 0 812 731 B1**
(45) Date of publication and mention of the grant of the patent: **27.03.2002**
(21) Application number: 97830273.5
(22) Date of filing: 04.06.1997
(51) Int. Cl.: B60R 11/00

(54) **Fixing system for a red warning triangle case**
Befestigungssystem für ein Warndreieck-Gehäuse
Système de fixation d'un coffret de triangle de signalisation

(30) Priority: 12.06.1996 IT RM960121 U
(43) Date of publication of application: 17.12.1997
(73) Proprietor: Borri, Giuliana, 00041 Albano Laziale (Roma) (IT)
(72) Inventor: Borri, Giuliana, 00041 Albano Laziale (Roma) (IT)
(74) Representative: Iannone, Carlo Luigi

(56) References cited:
- DE-A- 3 101 161
- DE-A- 3 341 388
- DE-U- 7 306 316
- FR-A- 1 169 751
- GB-A- 1 447 396

## Description

The present invention concerns a fixing system for a suitcase for a red warning triangle.

More particularly, the invention concerns a fixing system of the above kind which allows to fix the suitcase for the red warning triangle within the vehicle trunk.

As it is well known, all vehicles must be provided with a red warning triangle to indicate that the vehicle is stopped.

Usually, the red warning triangle is housed within the vehicle trunk, and is contained within containers or suitcases having different shapes and dimensions.

Recently, in some vehicle models, the red warning triangle has been placed directly on the inner part of the bonnet of the trunk, but the solution still more used is the suitcase or container to be put within the trunk, the red warning triangle being disassembled and must be assembled when necessary.

Many automotive producers and many manufacturers and providers of spare parts have recently realised red warning triangle cases within which also other material is provided, for example lamps, etc.

In any case, one of the main problems is the positioning of the red warning triangle case, either it is provided with further implements or it is contains only the red warning triangle, within the trunk without creating problems and encumbrance, particularly during the charging of the vehicle.

GB-A-1447396 describes a system according to the preamble of claim 1.

In view of these problems, the Applicant has realised a technical solution which allows to fix the red warning triangle case within the trunk in any position it is wished, and in any case fixing the same in a removable way, with great ease and without obstructing the use of the trunk space.

This specific object of the present invention is achieved by the features of claim 1.

Preferably, according to the invention, said system can comprise one or more brackets to support the rear portion of the suitcase, particularly when it is in a horizontal position.

Always according to the invention, said fixing means for the insert element or support can be comprised of at least two holes provided on the rear portion of said insert element or support, and of a corresponding number of fixing screws.

Still according to the invention, the releasable coupling between said insert or support element, and said handle can be obtained by an elastic tab provided with snap coupling means.

The present invention will be now described, for illustrative but not limitative purposes, according to its preferred embodiments, with particular reference to the figures of the enclosed drawings, wherein:
figure 1 is a front view of an embodiment of a fixing system according to the invention with a partial representation of the red warning triangle case; and
figure 2 is a top view of a component of the fixing system according to the invention.

Referring to the enclosed figures 1 and 2, it can be noted how the system according to the invention is realised by the co-operation of two main elements: an insert or support element 1 providing, as it can be better noted from figure 2, two holes 4 for the fixing on the wall within the trunk in any position. It is evident that the fixing can be obtained by any equivalent fixing system.

Furthermore, said insert or support element 1 provides centrally provided with an elastic tab 5, having a snap coupling 6 for coupling with the suitcase handle 2.

Said handle 2 has its shape corresponding to the shape of the body of the insert or support element 1, so that, when the suitcase 3 must be fixed , the handle 2 is fixed on the insert or support element and the snap coupling 6 of the elastic tab 5 determines the blocking in the wished position.

To remove the suitcase 3, it is sufficient to act on the tab 5, lowering the same so that the handle is unlocked.

In case it is chosen a vertical positioning of the suitcase 3, it is sufficient to use the above mentioned fixing means to lock the insert or support element 1 on the trunk inner wall.

Instead, in case it is wished a horizontal fixing of the suitcase 3, for example on the upper part of the trunk space, brackets (not shown) can be provided to support the rear part of the suitcase 3, wherein it must be inserted before the handle locking.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Fixing system for a suitcase(3) for a red warning triangle, comprising in combination an insert or support element(1) provided with fixing means(4) for its coupling on a trunk space wall and a locking means(2) realized on said suitcase(3), said insert or support element(1) and said locking means(2) being shaped in such a way that said insert or support element(1) engages said locking means(2) and said insert or support element(1) being provided with locking means quick coupling releasable means(5,6), **characterized in that** said locking means is a handle(2) of the suitcase(3) and that the insert or support element(1) enters within said handle(2).

2. Fixing system, according to claim 1, **characterised in that** said system comprises one or more brackets to support the rear portion of the suitcase (3), particularly when it is in a horizontal position.

3. Fixing system, according to one of the preceding claims, **characterised in that** said fixing means (4) for the insert or support element (1) are comprised of at least two holes (4) provided on the rear portion of said insert or support element (1), and of a corresponding number of fixing screws.

4. Fixing system, according to one of the preceding claims, **characterised in that** the releasable coupling between said insert or support element (1), and said handle (2) is obtained by an elastic tab (5) provided with snap coupling means (6).

## Patentansprüche

1. Befestigungssystem für einen roten Warndreieckskoffer (3), wobei ein mit befestigenden Mitteln (4) zu seiner Koppelung auf einer Kofferraumwand versehener/s Einsatz oder Unterstützungselement (1) und ein auf besagtem Koffer (3) konstruiertes Verriegelungsmittel (2) in Kombination umfasst wird, wobei besagter/s Einsatz oder Unterstützungselement (1) und Verriegelungsmittel (2) derart geformt sind, daß besagter/s Einsatz oder Unterstützungselement (1) besagtes Verriegelungsmittel (2) belegt, und wobei besagter/s Einsatz oder Unterstützungselement (1) mit Verriegelungsmittel-schnellkoppelungs zuoeffnenden Mitteln (5,6) versehen ist, **gekennzeichnet dadurch, daß** sagter Verriegelungsmittel ein Handgriff (2) des Koffers (3) ist und daß der Einsatz oder das Unterstützungselement (1) in besagten Handgriff (2) eindringt.

2. Befestigungssystem gemäß Anspruch 1, **gekennzeichnet dadurch, daß** sagter System einen oder mehrere Hilfsständer zur Unterstützung des Rückteils des Koffers (3) umfaßt, insbesondere wenn dieser in Horizontalposition ist.

3. Befestigungssystem gemäß einem der vorhergehenden Ansprüche, **gekennzeichnet dadurch, daß** besagte Befestigungsmittel (4) für den Einsatz oder das Unterstützungselement (1) mit mindestens zwei auf dem Rückteil des besagten Einsatzes oder Unterstützungselements (1) beschafften Löchern (4) und mit einer entsprechenden Anzahl Befestigungschrauben versehen sind.

4. Befestigungssystem gemäß einem der vorhergehenden Ansprüche, **gekennzeichnet dadurch, daß** die zuoeffnende Koppelung zwischen sagtem Einsatz oder Unterstützungselement (1) und sagtem Handgriff (2) durch einen mit schnappenden Koppelungsmitteln (6) versehenen elastischen Streifen erreicht wird.

## Revendications

1. Système de fixage pour une valise (3) à triangle de présignalisation, comprenant en combinaison une pièce ajoutée (1) ou élément de soutien fournie de moyens (4) de fixage pour son couplage sur une paroi limitant l'espace d'un coffre et moyens (2) de verrouillage réalisés sur ladite valise (3), ladite pièce ajoutée (1) ou élément de soutien et lesdits moyens (2) de verrouillage étant façonnés de telle manière que ladite pièce ajoutée (1) ou élément de soutien enclenche lesdits moyens de verrouillage (2), et ladite pièce ajoutée (1) ou élément de soutien étant fournie de moyens déclenchables (5,6) à couplage rapide de moyens de verrouillage, **caractérisés en ce que** ledit moyen de verrouillage est une poignée (2) de la valise (3) et que la pièce ajoutée (1) ou élément de soutien entre dans ladite poigneé.

2. Système de fixage sélon la revendication 1, **caracterisé en ce que** ledit système comprend un ou plusieurs soutiens pour soutenir la portion arrière de la valise (3), en particulier quand elle est en position horizontale.

3. Système de fixage selon une des revendications précédentes, **caractérisé en ce que** lesdits moyens (4) de fixage de la pièce ajoutée (1) ou élément de soutien sont composés au moins de deux trous (4) fournis sur la portion arrière de ladite pièce ajoutée (1) ou élément de soutien, et d'un nombre correspondant de vis de fixage.

4. Système de fixage selon une des revendications précédentes, **caractérisé en ce que** le couplage déclenchable entre ladite pièce ajoutée (1) ou élément de soutien et ladite poignée (2) est obtenu par une languette (5) élastique fournie de moyens (6) de couplage à claquement.
